# EUROPÄISCHE PATENTSCHRIFT

(11) **EP 2 354 619 B1**
(45) Veröffentlichungstag und Bekanntmachung des Hinweises auf die Patenterteilung: **16.07.2014**
(21) Anmeldenummer: 11000924.8
(22) Anmeldetag: 05.02.2011
(51) Int. Cl.: F16L 41/08

(54) **Vorrichtung zum Verbinden eines Hauptrohrs mit einem Seitenrohr**
Device for connecting a main pipe with a side pipe
Dispositif de liaison d'un tuyau principal et d'un tuyau latéral

(30) Priorität: 09.02.2010 DE 102010007483
(43) Veröffentlichungstag der Anmeldung: 10.08.2011
(73) Patentinhaber: Felber, Winfried, 86653 Monheim (DE)
(72) Erfinder: Felber, Winfried, 86653 Monheim (DE)
(74) Vertreter: Munk, Ludwig

(56) Entgegenhaltungen:
- DE-U1- 20 211 749
- KR-A- 20070 013 220
- KR-A- 20080 043 423
- KR-A- 20080 075 446
- KR-A- 20090 089 825

## Beschreibung

Die Erfindung betrifft eine Vorrichtung zum Verbinden eines Hauptrohrs eines Rohrsystems, insbesondere Kanalrohrsystems, mit einem einmündenden Seitenrohr mit einem in eine Wandausnehmung des Hauptrohrs einsetzbaren Anschlussstutzen, der mit seinem vorderen Endbereich an der Innenseite des Hauptrohrs abstützbar und hiermit mittels einer auf einen rückwärtigen, aus dem Hauptrohr herausragenden, starren Abschnitt des Anschlussstutzens aufgebrachten Spannkraft verspannbar ist.

Bei den derzeit in der Praxis verwendeten, z.B. in der DE 10 2009 011 360A oder der WO 99/31428 beschriebenen Anordnungen oben genannter Art besitzt der an der Innenseite des Hauptrohrs abstützbare, vordere Endbereich des Anschlussstutzens eine starre, fest an die Kontur des Anlagebereichs angepasste Form. Da die Kontur des Anlagebereichs, d.h. des Randbereichs der vom Anschlussstutzen durchgriffenen Wandausnehmung des Hauptrohrs jedoch vom Krümmungsradius der Innenwand des Hauptrohrs im Bereich der Wandausnehmung abhängt, muss bei den bekannten Anordnungen für jeden innerhalb der für die Genauigkeit der Anlage geltenden Toleranzgrenzen liegenden Bereich des Innendurchmessers und/oder der geometrischen Querschnittsform des Hauptrohrs ein eigener Anschlussstutzen bereitgestellt werden. Dies führt zu einem hohen Bereitstellungsaufwand, was unerwünscht ist. Ein weiterer Nachteil der bekannten Anordnungen besteht darin, dass die starre Form des Anschlussstutzens nur in einer ganz bestimmten Drehstellung exakt an der Innenkontur des Hauptrohrs zur Anlage kommt, was den Montageaufwand erhöht und zur Gefahr von Undichtheiten führt. Hinzu kommt, dass die bei der bekannten Anordnung vorgesehene, feste Form des vorderen Bereichs des Anschlussstutzens auf einen radialen Verlauf der zugeordneten Wandausnehmung abgestellt ist. Die Herstellung einer genau radialen Bohrung erweist sich jedoch bei den beengten Verhältnissen in einem Rohrgraben als sehr schwierig. Eine Abweichung von der Radialität führt jedoch zu Ungenauigkeiten in der Anlage und damit zu Undichtheiten. Ferner ist davon auszugehen, dass bei Hauptrohren hier zu betrachtender Art unterschiedliche Querschnittsformen, beispielsweise kreisförmige oder eiförmige Querschnitte vorkommen können, was die obigen Nachteile noch verstärkt.

Auch die KR-10-2008-0075446A offenbart eine Vorrichtung nach dem Oberbegriff des Anspruchs 1.

Hiervon ausgehend ist es daher die Aufgabe der vorliegenden Erfindung, eine Anschlussvorrichtung eingangs erwähnter Art mit einfachen und kostengünstigen Mitteln so zu verbessern, dass eine universelle Verwendbarkeit sowie eine einfache Montage und eine hohe Anlagegenauigkeit gewährleistet sind.

Diese Aufgabe wird erfindungsgemäß dadurch gelöst, dass der vordere Endbereich des Anschlussstutzens einen elastisch verformbaren, unter Zug an die Kontur des Inneren Randbereichs der zugeordneten Wandausnehmung des Hauptrohrs sich anschmiegenden Schmiegering aufweist, dessen für eine Abstützung an der Innenseite des Hauptrohrs wirksamer Durchmesser über den Durchmesser der zugeordneten Wandausnehmung des Hauptrohrs hinaus vergrößerbar ist und der von dem rückwärtigen, starren Abschnitt des Anschlussstutzens durch ein umlaufendes, eine zum Ausgleich der bei einem Anschmiegvorgang bewerkstelligten, axialen Formänderung des Schmiegerings entsprechend formvariable Struktur aufweisendes, zumindest Zugkräfte übertragendes Tragwerk örtlich getrennt und hierdurch mit dem starren Abschnitt des Anschlussstutzens verbunden ist.

Mit diesen Maßnahmen werden die oben geschilderten Nachteile der bekannten Anordnungen vollständig vermieden. Der Schmiegering kann auf Grund seiner Verformbarkeit sowie in Folge der die Verformung des Schmiegerings ausgleichenden Raum gebenden und/oder Eigenschaft des Tragwerks jeder vorhandenen Innenkontur des Hauptrohrs folgen und lässt sich dementsprechend unter Vermittlung des zumindest Zugkräfte übertragenden Tragwerks mit Hilfe der Spannvorrichtung in jede von der Innenkontur des Hauptrohrs im Kontaktbereich vorgegebene, d.h. im Bereich des Rands der zugeordneten Wandausnehmung vorgefundene Form bringen. Der erfindungsgemäße Schmiegering kann dabei jeden Verlauf von ganz eben bis stark sinusförmig annehmen. Die erfindungsgemäße Anordnung kann daher in vorteilhafter Weise unabhängig vom inneren Krümmungsradius und unabhängig von der geometrischen Form des Querschnitts und der Wandstärke des Hauptrohrs universell zum Einsatz kommen und gewährleistet unabhängig von der Genauigkeit der zugeordneten Wandausnehmung des Hauptrohrs und unabhängig von seiner Drehstellung in jedem Fall die erwünschte exakte Anlage im Bereich des inneren Rands der Wandausnehmung des Hauptrohrs. Mit Hilfe der erfindungsgemäßen Maßnahme ist daher sichergestellt, dass man bezogen auf eine Seitenrohrgröße praktisch für alle Anwendungsfälle nur eine Anschlussstutzenausführung benötigt, was die Bereitstellung vereinfacht und dementsprechend eine hohe Wirtschaftlichkeit ergibt und dass dennoch eine hohe Genauigkeit erreicht wird und zwar unabhängig von der Wandstärke bei dicken und bei dünnen Wandstärken des Hauptrohrs. Infolge der radialen Vergrößerbarkeit des Schmiegerings sind zudem eine einfache Montierbarkeit des gesamten Anschlussstutzens und anschließend eine zuverlässige Anlage an der Innenseite des Hauptrohrs gewährleistet. Zum Montieren des Anschlussstutzens kann der Durchmesser des Schmiegerings so verkleinert werden, dass er einfach durch die zugeordnete Wandausnehmung des Hauptrohrs durchsteckbar ist. Anschließend kann eine über den Durchmesser der Wandausnehmung des Hauptrohrs hinausgehende Vergrößerung erfolgen, so dass eine zuverlässige Kraftübertragung auf die Innenseite des Hauptrohrs sichergestellt ist.

Vorteilhafte Ausgestaltungen und zweckmäßige Fortbildungen der übergeordneten Maßnahmen sind in den Unteransprüchen angegeben.

Vorteilhaft kann der Schmiegering mit über seinen Umfang verteilten, in radialer Richtung ein- und ausstellbaren Stützelementen versehen sein. Diese können zweckmäßig jeweils als auf einer schmiegeringseitigen Schwenkachse schwenkbar aufgenommene, in radialer Richtung ein- und ausklappbare Klappen oder ein- und ausfahrbare Schieber ausgebildet sein. Die genannten Stützelemente ermöglichen auf einfache Weise die erwünschte Durchmesservergrößerung bzw. -verkleinerung des Schmiegerings. Die Stützelemente können bereits bei der Herstellung des Schmiegerings vormontiert werden, so dass nachträgliche Montagearbeiten entfallen. Im Falle einer bevorzugten Ausbildung der Stützelemente als schwenkbare Klappen werden diese beim Durchführen des Schmiegerings durch die zugeordnete Wandausnehmung des Hauptrohrs durch Anlage am Ausnehmungsrand automatisch eingeklappt und anschließend automatisch z.B. in Folge der Schwerkraft ausgeklappt, so dass ein entsprechender Arbeitsgang entbehrlich ist.

Eine weitere vorteilhafte Maßnahme kann darin bestehen, dass auf dem Schmiegering eine umlaufende Dichtung angeordnet ist, die eine zylindrische, die Wandausnehmung des Hauptrohrs durchgreifende Manschette und eine flanschartig hiervon abstehende, von unten abgestützte, vorzugsweise von den Stützelementen untergriffene Dichtleiste aufweist. Diese wird beim Durchführen des Schmiegerings durch die zugeordnete Wandausnehmung des Hauptrohrs nach oben umgebogen und fungiert auf diese Weise als vorgespannte Rückstellfeder für die sie unterfassenden Klappen etc..

Die zylindrische Manschette der Dichtung kann vorteilhaft das Tragwerk von außen umgreifend vom Schmiegering bis zum hiervon beabstandeten, rückwärtigen Abschnitt des Anschlussstutzens reichen und zweckmäßig mit ihrem rückwärtigen Ende hieran festgelegt sein. Dies ergibt eine zuverlässige Abdichtung des Tragwerks von außen. Zweckmäßig kann die genannte Manschette in ihrem vorderen Endbereich eine durch eine radiale Einziehung gebildete, nach radial außen offene Kammer aufweisen, in welche die Dichtleiste im hochgestellten Zustand eintauchen kann, so dass sich eine platzsparende Anordnung ergibt.

Gemäß einer weiteren Fortbildung kann dem Tragwerk ein von diesem umgriffenes Innendeckrohr zugeordnet sein, das vom Schmiegering bis zum hiervon beabstandeten, rückwärtigen Abschnitt des Anschlussstutzens reicht und einerseits in diesen und andererseits in eine schmiegeringseitig vorgesehene, zweckmäßig durch vom Schmiegering in axialer Richtung abstehende Zungen gebildete Führung eingreift und an zwei gegenüber der Scheitellinie des an der Innenseite des Hauptrohrs angeschmiegten Schmiegerings um 90° versetzten Zungen befestigt ist. Das Innendeckrohr stellt sicher, dass das Tragwerk von Innen abgedeckt wird, so dass hierdurch verursachte Störungen der Strömung im Anschlussstutzen verhindert werden. Zudem kann dem in den rückwärtigen Abschnitt des Anschlussstutzens eingreifenden Innendeckrohr ein dortiger Anschlag zugeordnet sein, der eine Einschubbewegung begrenzt, so dass sich zum Durchführen des Schmiegerings durch die zugeordnete Wandausnehmung des Hauptrohrs eine starre Anordnung erreichen lässt.

Gemäß einer besonders vorteilhaften Ausgestaltung der übergeordneten Maßnahmen kann das Tragwerk als durch Stäbe gebildetes Fachwerk ausgebildet sein, wobei eine Änderung des Verlaufs der Stäbe zugelassen ist, d.h. ein Stabverlaufänderungsfreiheitsgrad gegeben ist. Ein durch Stäbe gebildetes Fachwerk kann in vorteilhafter Weise nicht nur Zugkräfte übertragen, die zum Anpressen des Schmiegerings an die Innenseite des Hauptrohrs benötigt werden, sondern auch Druckkräfte, die ein Durchstecken des Schmiegerings durch die zugeordnete Wandausnehmung des Hauptrohrs erleichtern, was den Montagevorgang vereinfachen kann.

Gemäß einer anderen bevorzugten Ausgestaltung der übergeordneten Maßnahmen kann das Tragwerk als Seilgespanne mit einem zwischen schmiegeringseitig vorgesehenen und umfangsmäßig hiergegen versetzten, den rückwärtigen Abschnitt des Anschlussstutzens zugeordneten Seilhaltern mit Bewegungsfreiheitsgrad verlaufenden Seil ausgebildet sein. Hierbei ergibt sich eine besonders hohe Variabilität hinsichtlich der Anzahl der dem Schmiegering zugeordneten Krafteinleitungspunkte, was in vorteilhafter Weise eine praktisch gleichmäßige, auf dem ganzen Umfang des Schmiegerings wirkende Streckenlast ermöglicht. Da das Seilgespanne nur Zugkräfte überträgt, erweist sich hier der oben erwähnte, dem Innendeckrohr zugeordnete Anschlag im Bereich des rückwärtigen Abschnitts des Anschlussstutzens zur Bewerkstelligung einer Versteifung beim Einführvorgang als besonders zweckmäßig.

Eine weitere vorteilhafte Fortbildung der übergeordneten Maßnahmen kann darin bestehen, dass der Schmiegering, der hiervon beabstandete, rückwärtige Abschnitt des Anschlussstutzens und das dazwischen angeordnete Tragwerk als voneinander separate Bauteile bzw. gruppen ausgebildet sind und dass das Tragwerk einerseits mit dem Schmiegering und andererseits mit dem rückwärtigen Abschnitt des Anschlussstutzens kraftübertragend kuppelbar ist. Die genannte Mehrteiligkeit ermöglicht in vorteilhafter Weise eine separate Herstellung der einzelnen Teile, was die erforderlichen Herstellungswerkzeuge vereinfacht und damit die Herstellungskosten senken kann.

Eine weitere vorteilhafte Maßnahme kann darin bestehen, dass der Schmiegering mittels einer am Umfang des rückwärtigen Abschnitts des Anschlussstutzens angreifenden, direkt oder indirekt auf der Außenseite des Hauptrohrs abstützbaren Zugeinrichtung in bezüglich des Hauptrohrs radialer Richtung beaufschlagbar und mittels einer am Umfang des rückwärtigen Abschnitts des Anschlussstutzens verrastbaren, auf dem Hauptrohr aufnehmbaren Stützeinrichtung in der angeschmiegten Stellung haltbar ist. Diese Maßnahmen stellen sicher, dass die Zugeinrichtung nach dem Aufbringen der gewünschten Zugspannung auf den Anschlussstutzen abnehmbar und anderweitig verwendbar ist. Außerdem ist hierbei eine den Anschlussstutzen übergreifende Gestaltung der Zugeinrichtung möglich, was auch bei beengten Platzverhältnissen in einem Rohrgraben eine einfache und genaue Handhabung und damit eine hohe Bedienungsfreundlichkeit sowie die Einhaltung vorgegebener Grenzen für die Zugkraft ermöglicht.

Vorteilhaft können der rückwärtige Abschnitt des Anschlussstutzens mit einer umfangsseitigen Rillung mit umlaufenden Rillen und die Zugeinrichtung und Stützeinrichtung mit eine der Rillung zugeordnete Zahnung aufweisenden Eingriffsköpfen versehen sein. Dies ermöglicht in vorteilhafter Weise eine zangenartige Ausbildung der Zugeinrichtung und ein ratschenartiges Zusammenwirken der Stützeinrichtung mit der Rillung des rückwärtigen Abschnitts des Anschlussstutzens und damit eine hohe Montagefreundlichkeit.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine erfindungsgemäße Anschlussvorrichtung in der Einbaustellung, teilweise im Schnitt,
- Figur 2: die Anordnung gemäß Figur 1 beim Einbau,
- Figur 3: ein Beispiel mit einem durch ein Fachwerk gebildeten Tragwerk,
- Figur 4: ein Beispiel für eine alternative Fachwerkgestaltung,
- Figur 5: ein Beispiel mit einem als Seilgespanne ausgebildeten Tragwerk,
- Figur 6: eine perspektivische Ansicht eines mit schwenkbaren Einzelklappen versehenen Schmiegerings,
- Figur 7: eine Variante zu Figur 6 mit kranzförmig zusammenhängenden Klappen,
- Figur 8: einen Radialschnitt durch einen mit ein- und ausfahrbaren Schiebern versehenen Schmiegering,
- Figur 9: ein Beispiel für eine mehrteilige Ausführung des Anschlussstutzens,
- Figur 10: eine Variante zu Figur 9,
- Figur 11: eine perspektivische Ansicht der montierten Anschlussvorrichtung mit kastenförmigem Drucksattel,
- Figur 12: eine Alternative zu Figur 9 mit umlaufender Stütztrommel und
- Figur 13: ein weiteres Beispiel für eine auf einer Stützeinrichtung abgestützte Spanneinrichtung anhand einer Variante zu Figur 5.

Hauptanwendungsgebiet der Erfindung sind Kanalrohrsysteme, beispielsweise Entwässerungssysteme etc., mit Hauptrohren und an diese anzuschließenden Seitenrohren. Aber auch eine Verwendung bei mit einem Innen- oder Außendruck beaufschlagten Druckrohren ist möglich.

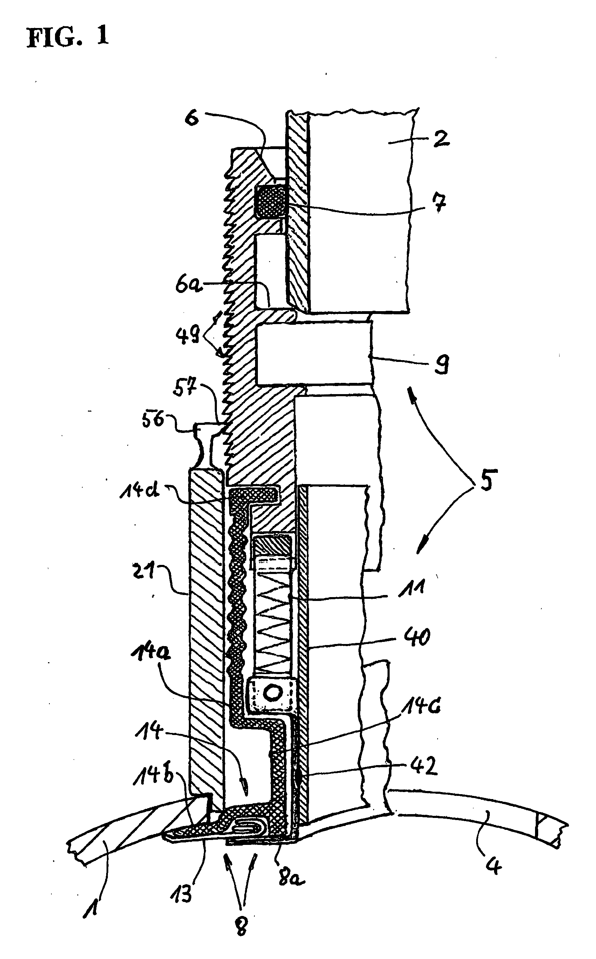

Die Figur 1 zeigt ein Hauptrohr 1 und ein hieran anzuschließendes, seitlich einmündendes Seitenrohr 2. Das Hauptrohr 1 kann unterschiedliche Größen und Querschnittsformen, beispielsweise einen kreisförmigen Querschnitt oder einen eiförmigen Querschnitt etc. aufweisen. Der Figur 1 liegt ein kreisförmiges Hauptrohr 1 zugrunde. Das Seitenrohr 2 besitzt hier ebenfalls einen kreisförmigen Querschnitt. Das Hauptrohr 1 besitzt natürlich einen größeren Durchmesser und damit eine größere Querschnittsfläche als das Seitenrohr 2.

Das Seitenrohr 2 wird dicht mit dem Hauptrohr 1 verbunden. Hierzu findet eine Anschlussvorrichtung der den Figuren 1 bis 5 zugrunde liegenden Art Verwendung. Diese besitzt einen in eine als Kernbohrung hergestellte Wandausnehmung 4 des Hauptrohrs 1 eingesetzten Anschlussstutzen 5. Dieser enthält einen seinen vorderen Endbereich bildenden, in der der Figur 1 zugrunde liegenden Einbaustellung an die sinusförmige Kontur des inneren Randbereichs der zugeordneten Wandausnehmung 4 des Hauptrohrs 1 anschmiegbaren und dementsprechend elastisch verformbaren Schmiegering 8 und einen seinen rückwärtigen Abschnitt bildenden, als starrer und nicht verformbarer Rohrabschnitt ausgebildeten Zugring 9, auf den mittels einer weiter unten ausführlich beschriebenen Zugeinrichtung eine bezüglich des Hauptrohrs 1 nach radial außen gerichtete Zugkraft aufbringbar ist, die in der der Figur 1 zugrundeliegenden Einbaustellung erhalten bleibt. Der Zugring 9 ist vom vorderen Schmiegering 8 beabstandet und hängt hiermit über ein in Figur 1 lediglich schematisch angedeutetes, umlaufendes Tragwerk 11 zusammen, das eine formvariable, zum Ausgleich der bei einem Anschmiegvorgang sich ergebenden, axialen Formänderung des Schmiegerings 8 geeignete, zumindest Zugkräfte übertragende Struktur aufweist. Der Zugring 9 besitzt einen rückwärtigen Kragen 6 zum Einstecken des Seitenrohrs 2. Diesem kann ein die Einstecktiefe begrenzender, durch eine umlaufende Rippe gebildeter Anschlag 6a sowie eine in einer umlaufenden Nut aufgenommene, umlaufende Dichtung 7 zugeordnet sein. Oberhalb und unterhalb der am Seitenrohr 2 anliegenden Dichtung 7 ist ausreichend Radialspiel zwischen dem Außenumfang des Seitenrohrs 2 und dem Innenumfang des Kragens 6 vorgesehen, so dass seitliche Auslenkungen des Seitenrohrs möglich sind.

Die am Zugring 9 angreifende Zugkraft wird mittels des Tragwerks 11 auf den Schmiegering 8 übertragen, so dass dieser an die Innenseite des Randbereichs der Wandausnehmung 4 angepresst und dabei entsprechend der sinusförmigen Kontur dieses Anlagebereichs verformt wird. Diese axiale Formänderung des Schmiegerings 8 wird vom Tragwerk 11 in Folge seiner Formänderungsfähigkeit unter Beibehaltung der gewünschten Kraftübertragung zugelassen und ausgeglichen. Das Tragwerk 11 erfährt dementsprechend eine innere Formänderung derart, dass der Verlauf seines unteren Rands dem Verlauf des verformten Schmiegerings 8 folgt, während sein oberer Randbereich an den formstabilen, starren Zugring 9 anschließt und keine Formänderung erfährt.

In der Ausgangsstellung kann der Schmiegering 8 einen ebenen Verlauf aufweisen. In der Einbaustellung entspricht die Kontur dem sinusförmigen Verlauf des Rands der Wandausnehmung 4 des Hauptrohrs 1. Zweckmäßig kann der Schmiegering 8 bereits bei der Herstellung eine leichte, sinusförmig verlaufende Ausgangskontur bekommen, so dass die bei der Montage stattfindende Verformung gegenüber einer planen Ausgangsform reduziert wird. Um auch den erforderlichen Verschiebeweg innerhalb des Tragwerks 11 gering zu halten, kann auch die Unterkante des den Zugring 9 bildenden Rohrabschnitts einen leicht sinusförmigen Verlauf aufweisen. Der angeformte Sinusverlauf des Schmiegerings 8 kann flacher oder steiler als der beim Einbau zu erwartende Sinusverlauf sein, so dass bei der Montage immer noch eine gewisse Verformung und damit eine gewisse zuverlässige Spannung und spaltfreie Anlage erfolgt.

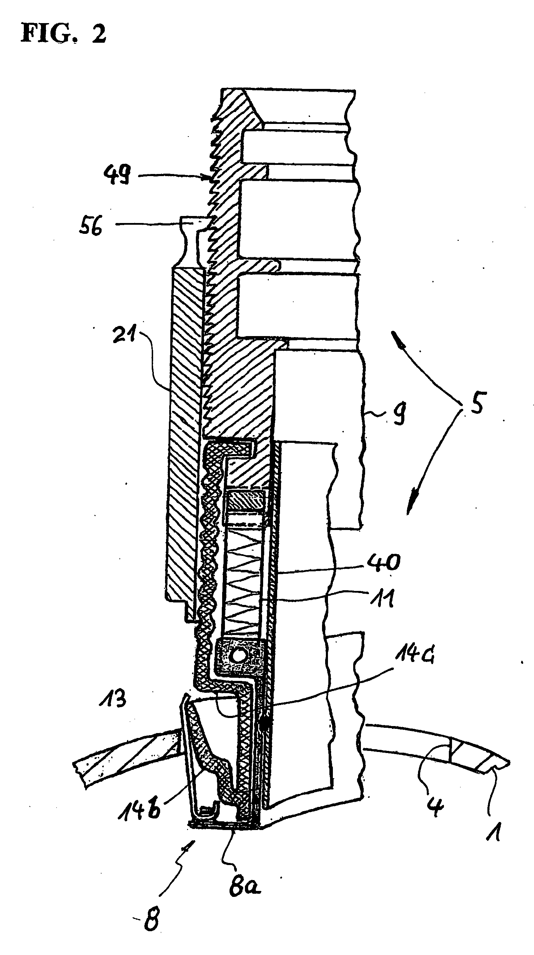

Der Einbau des Anschlussstutzens 5 erfolgt, wie aus Figur 2 ersichtlich ist, bevor das Seitenrohr 2 eingesteckt wird. Dabei wird der Anschlussstutzen 5 mit dem Schmiegering 8 voran durch die zugeordnete Wandausnehmung 4 des Hauptrohrs 1 durchgesteckt. Um diesen Vorgang zu erleichtern, ist der Schmiegering 8 so ausgebildet, dass sein Außendurchmesser gegenüber der der Figur 1 zugrunde liegenden Einbaustellung soweit verkleinert werden kann, dass der erwähnte Durchsteckvorgang ohne Weiteres möglich ist und umgekehrt.

Hierzu kann der Schmiegering 8 mit über seinen ganzen Umfang verteilten, zur Vergrößerung bzw. Verkleinerung des Außendurchmessers in radialer Richtung bewegbaren Stützelementen 13 versehen sein. Der Schmiegering 8 besitzt dementsprechend einen umlaufenden, nach Art eines Federelements elastisch verformbaren Tragring 8a, auf dem die Stützelemente 13 aufgenommen sind. Die Bewegbarkeit der Stützelemente 13 stellt sicher, dass diese das Durchstecken des Schmiegerings 8 durch die Wandausnehmung 4 nicht behindern und dass anschließend dennoch eine zuverlässige Abstützung am inneren Randbereich der Wandausnehmung 4 erfolgen kann, wie durch einen Vergleich der Figuren 1 und 2 erkennbar ist. Der Durchmesser der Wandausnehmung 4 muss daher in vorteilhafter Weise nur wenig größer als der Außendurchmesser des Tragrings 8a des Schmiegerings 8 sein.

Dem Schmiegering 8 ist eine ihn übergreifende Dichtung 14 zugeordnet. Diese besitzt eine zylindrische, in die Wandausnehmung 4 eingreifende bzw. diese durchgreifende Manschette 14a und eine von deren unterem Endbereich in radialer Richtung flanschartig abstehende Dichtleiste 14b, die eine zuverlässige Abdichtung der Anlage der Stützelemente 13 gegenüber dem Hauptrohr 1 ergibt und deren Durchmesser dementsprechend dem Durchmesser des Schmiegerings 8 in der Einbaustellung in etwa entspricht, wie aus Figur 1 erkennbar ist. Beim Durchstecken des Schmiegerings 8 durch die Wandausnehmung 4 wird die Dichtleiste 14b, wie Figur 2 zeigt, durch die an der umlaufenden Wand der Wandausnehmung 4 anlaufenden Stützelemente oder wenn keine Stützelemente vorhanden sind, durch eigenen Anlauf an der genannten Wand nach oben geschwenkt. Die Manschette 14a der Dichtung ist dabei mit einer durch einen radialen Einzug gebildeten Kammer 14c versehen, in welche die hochgeschwenkte Dichtleiste 14b eintauchen kann, was eine platzsparende Anordnung ergibt. Bei dem den Figuren 1 und 2 zugrunde liegenden Beispiel reicht die Manschette 14a vom Schmiegering 8 bis zum unteren Bereich des hiervon beabstandeten Zugrings 9 und bildet dementsprechend eine das Tragwerk 11 außen umfassende Dichtmuffe. Die Dichtung 14 kann auf dem Schmiegering 8 aufliegen und ist zweckmäßig im Bereich des oberen Rands der Manschette 14a mit einem in eine zugeordnete Nut des Zugrings 9 eingreifenden Befestigungsflansch 14d versehen.

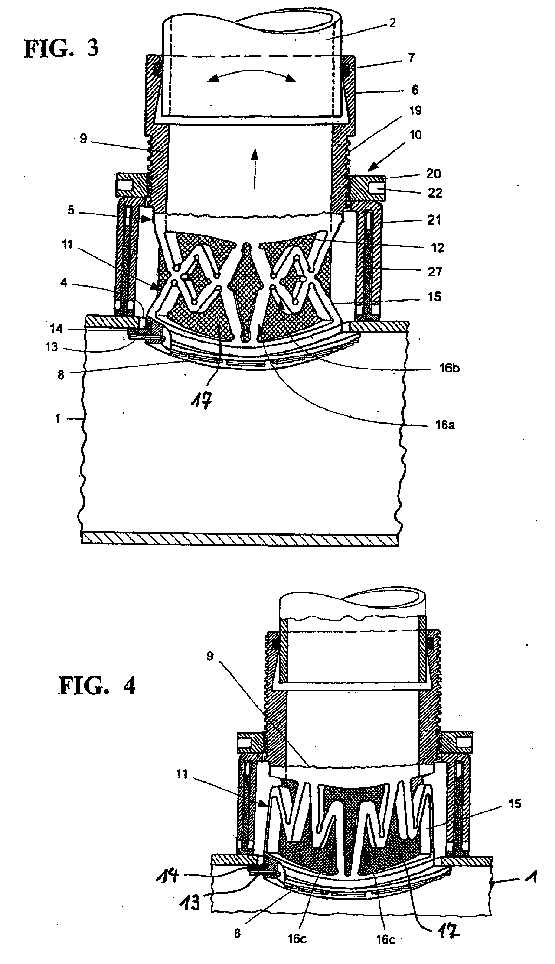

Das die Formänderung des Schmiegerings 8 ausgleichende Tragwerk 11 kann, wie beispielsweise die Figuren 3 und 4 zeigen, als durch Stäbe 15 gebildetes Fachwerk ausgebildet sein. Die Stäbe 15, die Zug- und Druckkräfte übertragen können, sind dabei so angeordnet, dass sich in axialer Richtung und in Umfangsrichtung verlängerbare bzw. verkürzbare Stabanordnungen ergeben, was den erwünschten Ausgleich der beim Einbau sich ergebenden Formänderung des Schmiegerings 8 ermöglicht. Der Durchmesser und damit die Umfangslänge des Tragwerks 11 ändert sich dabei nicht.

Bei der Ausführung gemäß Figur 3 bilden die Stäbe 15 rautenförmige Stabanordnungen 16a, b, die in bezüglich der Achse des Anschlussstutzens 5 axialer Richtung und in Umfangsrichtung gestreckt und gestaucht werden können, um die Formänderung des Schmiegerings 8 auszugleichen. Eine Streckung in axialer Richtung bewirkt eine Stauchung in Umfangsrichtung und umgekehrt. Die rautenförmigen Stabanordnungen 16a bilden praktisch am Schmiegering 8 und am Zugring 9 angreifende Rauten, die von einander beabstandet sind und durch die rautenförmigen Stabanordnungen 16b, die gegenüber dem Schmiegering 8 und Zugring 9 frei sind, miteinander verbunden werden. Auf diese Weise werden die vom Zugring 9 ausgeübten Zugkräfte durch innere Verspannung des Tragwerks 11 zuverlässig nach Art einer Streckenlast auf den Schmiegering 8 übertragen.

Bei der Ausführung gemäß Figur 4 besteht das das Tragwerk 11 bildende Fachwerk aus am Schmiegering 8 und am Zugring 9 angreifenden Z-förmigen Stabanordnungen 16c, die ebenfalls in axialer Richtung bzw. Umfangsrichtung gestreckt bzw.. gestaucht werden können. Die über den Umfang verteilten Stabanordnungen 16c können parallel hintereinander angeordnet sein. Zweckmäßig sind jedoch jeweils zwei Stabanordnungen 16c bezüglich einer axialen Mantellinie spiegelbildlich zueinander angeordnet, wie Figur 4 zeigt. Dabei sind vorteilhaft jeweils vier derartige spiegelbildliche Paare über den Umfang des Schmiegerings 8 verteilt vorgesehen, wobei zwei dieser Paare auf der Scheitellinie des verformten, d.h. an die Innenkontur des Hauptrohrs 1 angepressten Schmiegerings 8 und zwei um 90° hiergegen versetzt angeordnet sind.

Um einen wasserdichten Anschlussstutzen zu schaffen, kann das das Tragwerk 11 bildende Fachwerk mit die Zwischenräume zwischen den die tragenden Fachwerkelemente bildenden Stäben 15 sowie dem Schmiegering 8 und dem Zugring 9 ausfachenden Zwischenhäuten 17 versehen sein. Diese können zweckmäßig nach Art von Faltenbälgen ausgebildet sein, die so gefaltet sind, dass die sog. Faltenberge in bezüglich der Achse des Anschlussstutzens 5 radialer Richtung nach außen weisen. Sofern die Zwischenräume des Fachwerks ausfachende Zwischenhäute 17 vorgesehen sind, braucht die Dichtung 14 nicht bis zum Zugring 9 hochgeführt sein, sondern kann im Bereich des Schmiegerings 8 enden, wie aus den Figuren 3 und 4 ersichtlich ist. Bei den Ausführungen gemäß Figuren 3 und 4 sind die aneinander anschließenden Stäbe 15 des das Tragwerk 11 bildenden Fachwerks durch sog. Filmscharniere, die durch Auskehlungen gebildet werden, gelenkig miteinander verbunden. Selbstverständlich könnten aber auch richtige Scharniergelenke vorgesehen sein.

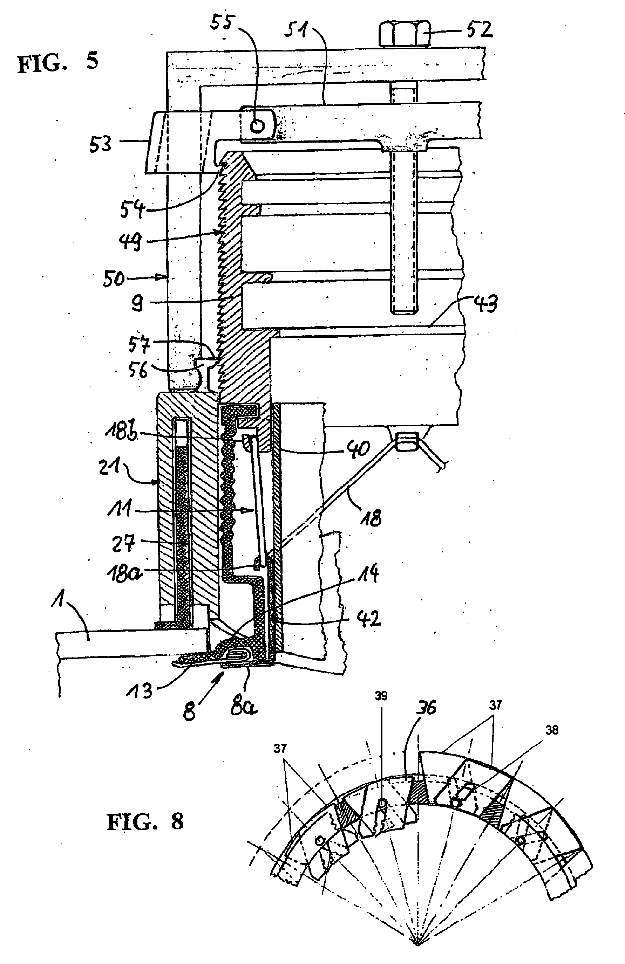

Das in den Figuren 1 und 2 lediglich schematisch angedeutete Tragwerk 11 kann abweichend von einer Fachwerkausführung gemäß Figuren 3 und 4 auch als Seilgespanne der aus Figur 5 ersichtlichen Art ausgebildet sein. Ein derartiges Seiltragwerk besteht aus einem umlaufenden Seil 18, das über schmiegeringseitig vorgesehene Seilhalter 18a und umfangsmäßig hiergegen versetzte, zugringseitige Seilhalter 18b mit Bewegungsfreiheitsgrad in Seillängsrichtung geführt ist, so dass sich ein fachwerkartiger zickzack-förmiger Verlauf des Seils 18 ergibt. In Figur 5 sind als Seilhalter 18a, b, klauenförmige Haken zum Einhängen des Seils 18 amgedeutet. Zweckmäßig können zur Bildung des Seilhalters jedoch geschlossene Ösen vorgesehen sein, durch welche das Seil 18 durchgezogen wird. Dieses soll sich zum Ausgleich der Formänderung des Schmiegerings 8 gegenüber den Seilhaltern 18a, b, bewegen können, so dass sich die gegenseitigen Abstände unter Beibehaltung der Seilspannung verkleinern bzw. vergrößern können. Die Anzahl der am Umfang vorgesehenen Seilhalter 18a, b, ist nicht begrenzt. Zweckmäßig sind jeweils mindestens 4 Seilhalter 18a, b am Umfang vorgesehen. Anstelle eines Seils 18 könnte selbstverständlich auch ein anderes, in sich bewegliches Zugorgan, beispielsweise eine Kette vorgesehen sein.

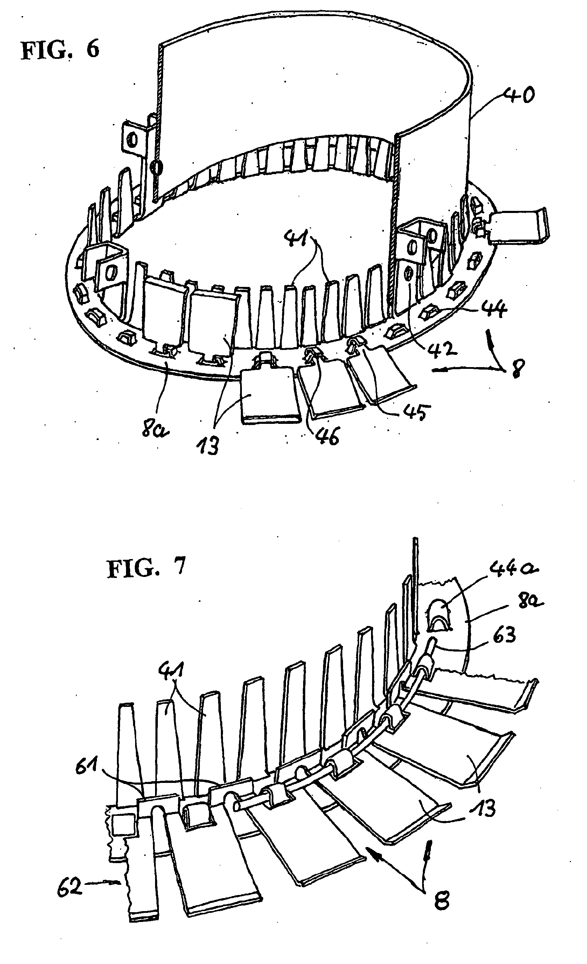

Zweckmäßig wird das Tragwerk 11 gegenüber der Innenseite des Anschlussstutzens 5 abgedeckt, was eine Störung der im Anschlussstutzen 5 stattfindenden Strömung verhindert und das Tragwerk 11 gegen Beeinträchtigungen von der Innenseite des Anschlussstutzens 5 her schützt. Hierzu kann ein in den Figuren 1, 2 und 5 gezeigtes, vom Tragwerk 11 umfasstes, diesem zugeordnetes Innendeckrohr 40 vorgesehen sein, das sich vom Schmiegering 8 bis zum hiervon distanzierten Zugring 9 erstreckt bzw. in diesen eingreift. Schmiegeringseitig ist eine, dem Innendeckrohr 40 zugeordnete Fassung vorgesehen. Hierzu kann der Tragring 8a des Schmiegerings 8, wie Figur 6 zeigt, mit von seinem inneren Rand hochstehenden Zungen 41 versehen sein, die eine umlaufende Fassung bilden, in welche das Innendeckrohr 40 mit seinem unteren Ende einsteckbar ist. Zweckmäßig ist das Innendeckrohr 40 am Schmiegering 8 befestigt, wie in den Figuren 1, 2 und 5, 6 durch Schweißpunkte 42 angedeutet ist. Die Befestigung erfolgt zweckmäßig an zwei diametral einander gegenüberliegenden Punkten, die gegenüber der Scheitellinie des im Einbauzustand verformten Schmiegerings 8 jeweils um 90° versetzt sind. Das Innendeckrohr 40 ist zweckmäßig an ausgewählten Zungen 41 des Schmiegerings 8 befestigt.

Das obere Ende des Innendeckrohr 40 greift verschiebbar in das untere Ende der Bohrung des Zugrings 9 ein, so dass sich eine entsprechende Führung ergibt. Dabei kann die Einfahrtiefe durch einen zweckmäßig als umlaufender Bund ausgebildeten Anschlag 43 begrenzt sein. Ein derartiger Anschlag erweist sich insbesondere bei der Ausführung gemäß Figur 5 mit einem als Seilgespanne ausgebildeten Tragwerk 11, das nur Zugkräfte übertragen kann, als zweckmäßig. Durch Anlaufen des oberen Endes des Innendeckrohrs 40 an den Anschlag 43, dessen Position so gewählt ist, dass ausreichend Weg für jede gewünschte Verformung des Schmiegerings 8 vorhanden ist, ergibt sich ein ausreichender Widerstand, um den Schmiegering 8 mit seinen in radialer Richtung bewegbaren Traagelementen 13 und der Dichtung 14 auch gegen einen leichten Widerstand in der aus Figur 2 entnehmbaren Art durch die zugeordnete Wandausnehmung 4 des Hauptrohrs 1 hindurchstecken zu können.

Die oben erwähnten, dem Schmiegering 8 zugeordneten Stützelemente 13 können als an den Tragring 8a des Schmiegerings 8 schwenkbar angelenkte, über den Außenumfang des Tragrings 8a ausklappbare Klappen ausgebildet sein. Eine derartige Ausführung ist in den Figuren 6, 7 im Einzelnen dargestellt. Die genannten Klappen sind jeweils um eine zur Bildung der Schwenkachsen mit zur Ringebene parallele Schwenkachse schwenkbar. Bei der Ausführung gemäß Figur 6 ist der Tragring 8a des Schmiegerings 8 zur Bildung der Schwenkachsen mit ausgestanzten und herausgebogenen, brückenförmigen Hutzen 44 versehen. Die Klappen besitzen einen Hals 45, der die jeweils zugeordnete Hutze 44 durchgreift und mit einer umgebogenen Klaue 46 übergreift, so dass sich eine Schwenklagerung ergibt. Die genannten Klappen werden bei der Herstellung des Anschlussstutzens 5 auf dem Tragring 8a vormontiert, was die Arbeiten auf der Baustelle erleichtert. In Figur 6 sind die dargestellten Klappen teilweise ausgeklappt und teilweise eingeklappt gezeigt Zum Durchstecken des Schmiegerings 8 durch die zugeordnete Wandausnehmung 4 des Hauptrohrs 1 werden die Klappen in die in Figur 6 links dargestellte Stellung hochgeklappt. Anschließend erfolgt eine durch die Schwerkraft und/oder die von der Dichtung 14 ausgeübte Rückstellkraft bewerkstelligte Ausklappbewegung in die in Figur 6 rechts dargestellte Arbeitsstellung.

In Figur 6 sind die die Stützelemente 13 bildenden Klappen als Einzelelemente ausgebildet, die unabhängig voneinander bewegbar sind. Bei der in Figur 7 gezeigten alternativen Ausführung hängen die einander benachbarten Klappen jeweils über einen Verbindungssteg 61 zusammen. Es ergibt sich daher ein geschlossen umlaufender, alle Klappen enthaltender Klappenkranz 62, der als einteiliges Stanzteil oder als an den Enden verbundener, mit den durch Stanzen angeformten Klappen versehener Streifen hergestellt werden kann. Zur Bildung einer Drehlagerung ist der Tragring 8a mit Hutzen 44a versehen, die im Gegensatz zu den radiale Durchstecköffnungen bildenden Hutzen 44 der Figur 6, in Umfangsrichtung verlaufende Durchstecköffnungen bilden, die von durch einen Ausschnitt gebildeten, an die Verbindungsstege 61 anschließenden, durch die ein Rundstab durchgesteckt ist, der von den benachbarten Verbindungsstegen 61 hintergriffen wird. Zweckmäßig ist dabei ein durch alle Hutzen 44a durchgehender Ring 63 vorgesehen, der aus Draht oder Rundstabmaterial besteht.

Anstelle schwenkbar gelagerter Klappen könnten natürlich auch andere Schwenkelemente, z.B. einstückig mit dem Schmiegering 8 ausgebildete, von diesem in Einschubrichtung vorspringende Winkelklauen etc. vorgesehen sein, die in Folge elastischer Ausbildung so viel radiale Beweglichkeit besitzen, dass sie von einer nach radial innen geschwenkten Position in eine ausgeschwenkte Arbeitsstellung bringbar sind.

Anstelle schwenkbar gelagerter Klappen und/oder biegsam angeordneter Klauen können zur Bildung der oben erwähnten, in radialer Richtung bewegbaren Stützelemente 13 auch verschiebbar auf dem Schmiegering 8 angeordnete, über dessen Außenumfang ausfahrbare Schieber vorgesehen sein. Eine derartige Anordnung liegt den Figuren 3 und 4 zugrunde und ist in Figur 8 im Einzelnen dargestellt. Hierbei kann der Schmiegering 8 mit radial verlaufenden, femsterförmigen Durchbrüchen 36 versehen sein, in denen die die Stützelemente 13 bildenden Schieber aus- und einfahrbar angeordnet sind. Zweckmäßig sind dabei in jedem Durchbruch 36 zwei aufeinander angeordnete Schieberelemente 37 vorgesehen, die bezüglich der radialen Richtung leicht verdreht und spiegelbildlich hierzu angeordnet sind, wie Figur 8 anschaulich erkennen lässt. Die Ausfahrrichtung weicht dementsprechend von der radialen Richtung ab, so dass die radial äußere Bogenlänge der Schieber-Doppelanordnung im Verlauf der Ausschubbewegung sich vergrößert. Die Schieberelemente 37 sind dabei zweckmäßig so ausgebildet, dass sich in der ganz ausgefahrenen Stellung die radial äußeren Kanten aller Schieberelemente 37 berühren und so eine praktisch geschlossen umlaufende Außenkante bilden. Zur Erleichterung der Montage und der Betätigung der Schieberelemente 37 sind diese jeweils mit einer in Ausschubrichtung verlaufenden, von ihrem inneren Rand ausgehenden Längsschlitz 38 versehen, wobei die Längsschlitze 38 übereinander angeordneter Schieberelemente 37 von einem den zugeordneten Durchbruch 36 durchsetzenden Stift 39 durchgriffen sind, dem schlitzseitige Rastkanten zugeordnet sein können.

Zum Ausfahren der Schieber kann zweckmäßig ein in den Anschlussstutzen 5 in radialer Richtung einführbarer Dorn Verwendung finden, der direkt oder unter Zwischenschaltung eines in den Anschlussstutzen 5 eingesetzten Federkorbs mit dem radial inneren Ende der Schieberelemente 37 zusammen wirkt. Der genannte Federkorb kann in radialer Richtung bewegbare Federlamellen besitzen, die durch den Dorn radial ausstellbar sind und ihrerseits die Schieber betätigen.

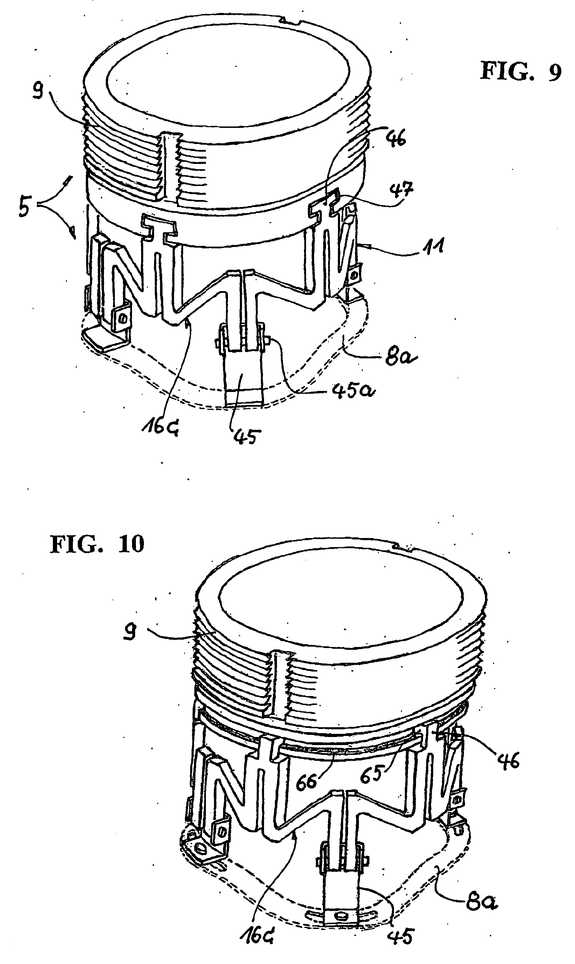

Bei der den Figuren 3 und 4 zugrunde liegenden Ausführung sind der Schmiegering 8, der Zugring 9 und das dazwischen angeordnete Tragwerk 11 einstückig ausgebildet. Dies hat den Vorteil, dass keinerlei Zusammenbau erforderlich ist. Andererseits sind jedoch vergleichsweise aufwändige Werkzeuge zur Herstellung erforderlich. In diesem Zusammenhang ist nämlich davon auszugehen, dass für die erfindungsgemäße Vorrichtung zumindest weitgehend vorzugsweise aus Kunststoff bestehende Spritzgusselemente Verwendung finden können. Um dem genannten Problem abzuhelfen können der Schmiegering 8, der hiervon beabstandete Zugring 9 und das dazwischen angeordnete Tragwerk 11 als voneinander separate Bauteile bzw. -gruppen ausgebildet sein, was die zur Herstellung benötigten Werkzeuge vereinfacht und zudem die Möglichkeit bietet, für verschiedene Teile verschiedene Materialien zu verwenden. Anordnungen dieser Art liegen beispielsweise den Figuren 1, 2 und 5 zugrunde und werden anhand der Figuren 9 und 10 näher erläutert.

Bei der Gestaltung des Tragwerks 11 als Seilgespanne gemäß Figur 5 ergibt sich die gewünschte Auflösung in verschiedene Bauteile bzw. -gruppen automatisch. Bei einer Ausführung mit einem als Fachwerk ausgebildeten, separaten Tragwerk 11 ist dieses, wie Figur 9 anschaulich zeigt, einerseits mit dem Schmiegering 8 und andererseits mit dem hiervon beabstandeten Zugring 9 durch Steck- und/oder Stiftverbindungen vorzugsweise spielfrei kraftübertragend verbunden. Der Schmiegering 8 ist mit aufgesetzten, winkelförmigen Halteböcken 45 versehen, an welche die freien unteren Enden der Stabanordnungen 16 des das Tragwerk 11 bildenden Fachwerks durch Lagerstifte 45a angeschlossen sind. Jeweils zwei einander zugewandte parallele Stäbe von zwei einander benachbarten Stabanordnungen 16c sind gemeinsam mittels eines durchgehenden Lagerstifts 45a auf einem Haltebock 45 aufgenommen. Bei vier am Umfang des Schmiegerings 8 vorgesehenen, derartigen Doppel-Stabanordnungen 16c ergeben sich dementsprechend vier am Umfang des Schmiegerings 8 vorgesehene Halteböcke 45.

Die oberen Enden der einander zugewandten Stäbe benachbarter, Z-förmiger Stabanordnungen 16c hängen über einen angeformten Steg zusammen, von dem ein Haltekopf 46 absteht, der in Figur 9 schlegelförmig ist und in eine zugeordnete, im Bereich des unteren Rands des Zugrings 9 vorgesehene, ebenfalls schlegelförmige Halteausnehmung 47 eingreift, so dass in axialer Richtung verlaufende Zug- und Druckkräfte durch Formschluss zuverlässig übertragen werden. Zweckmäßig können die Halteköpfe 46 rastend in die zugeordneten Halteausnehmungen 47 eingreifen, was den Zusammenbau erleichtert. Dabei werden zunächst die Stabanordnungen 16c am Zugring 9 angebracht und danach mittels der Lagerstifte 45 an den Schmiegering 8 angeschlossen.

Bei der Ausführung gemäß Figur 9 sind die Halteköpfe 46 in Umfangsrichtung blockiert. Es wäre aber auch eine in Umfangsrichtung bewegliche Anordnung der Haltköpfe 46 möglich. Eine derartige Ausführung zeigt die Figur 10. Dabei greifen die Halteköpfe 46 mit einer nach radial innen vorspringenden Gleitleiste 65 in eine umlaufende, nach radial außen offene Nut 66 des Zugrings 9 ein. Ansonsten liegt Übereinstimmung mit Figur 9 vor, worauf Bezug genommen wird. Die Beweglichkeit der Halteköpfe 46 in Umfangsrichtung ermöglicht einen ähnlichen Ausgleich wie ein Seilgespanne.

Bei einer Ausführung gemäß Figuren 9 und 10 sind der Zugring 9 und die Stabelemente 16c des das Tragwerk 11 bildenden Fachwerks als Kunststoff-Spritzgussteile ausgebildet. Der Schmiegering 8 besteht demgegenüber weitgehend aus Metall. Dies erleichtert eine Gestaltung des Schmiegerings 8 in der insbesondere aus Figur 6 ersichtlichen Art mit angeformten Zungen 41 und Schwenklagern 44. In derselben Weise könnten auch die Halteböcke 45 angeformt sein.

Zur Bildung der oben bereits erwähnten Spanneinrichtung kann, wie aus den Figuren 3 und 4 ersichtlich ist, der Zugring 9 mit einem Außengewinde 19 versehen sein, auf das ein als Gewindering ausgebildeter Spannring 20 aufschraubbar ist, der direkt oder indirekt, hier indirekt über eine Stützeinrichtung 21, auf dem Außenumfang des Hauptrohrs 1 abgestützt ist. Durch Drehen des den Spannring 20 bildenden Gewinderings kann der Zugring 9, wie in Figur 3 durch einen Pfeil angedeutet ist, nach oben, d.h. bezüglich des Hauptrohrs 1 nach radial außen bewegt werden, wodurch über das Tragwerk 11 eine Zugkraft auf den Schmiegering 8 ausgeübt und dieser dementsprechend im Bereich des Rands der zugeordneten Wandausnehmung 4 an die Innenoberfläche des Hauptrohrs 1 angelegt wird. Die auf den Schmiegering 8 ausgeübte Zugkraft wird dabei praktisch nach Art einer über den ganzen Umfang vorhandenen Streckenlast aufgebracht, so dass auf dem ganzen Umfang eine satte Anlage erreicht wird. Zur Betätigung des den Zugring 20 bildenden Gewinderings kann ein Werkzeug Verwendung finden. Dementsprechend hat der Zugring 20 durch umfangsseitige Ausnehmungen 22 gebildete Werkzeugangriffsmittel.

Aus der Figur 5 ist eine andere Ausbildung der Spanneinrichtung ersichtlich. Hierbei ist der Zugring 9 mit einer außenumfangsseitigen Rillung 49 mit im Querschnitt sägezahnartigen, parallel umlaufenden Rillen- und Stegen versehen. Zum Aufbringen einer nach radial außen gerichteten Zugkraft ist ein den Zugring 9 übergreifender, portalartiger Bock 50 vorgesehen, dessen seitliche, den Zugring 9 fllankierende Schenkel direkt oder indirekt, hier ebenfalls indirekt über eine Stützeinrichtung 21, auf dem Außenumfang des Hauptrohrs 1 abgestützt sind. Innerhalb des Bocks 50 ist ein heb- und senkbarer Hubbalken 51 vorgesehen, der zur Bewerkstelligung der gewünschten Hub- und Senkbewegung im Eingriff mit einem am Bock 50 abgestützten Huborgan ist. Im dargestellten Beispiel ist hierzu eine mit ihrem Kopf auf dem oberen Quersteg des portalförmigen Bocks 50 abgestützte Schraube 52 vorgesehen, deren Gewindeschaft in eine zugeordnete Gewindebohrung des Hubbalkens 51 eingreift.

Der Hubbalken 51 ist zur Bildung einer Zange mit an seinen Enden angelenkten Eingriffsköpfen 53 versehen, die mit einer der umfangsseitigen Rillung 49 des Zugrings 9 zugeordneten Gegenzahnung 54 versehen sind. Die Schwenkachsen 55 der Eingriffsköpfe 53 liegen radial innerhalb des Außenumfangs des Zugrings 9, so dass sich beim Anheben des Hubbalkens 51 automatisch ein zangenartiger Eingriff der Gegenzahnung 54 in die Zahnung der Rillung 49 und damit eine formschlüssige Kraftübertragung ergibt. Die als Huborgan fungierende Schraube 52 kann in vorteilhafter Weise von oben betätigt werden, was den Einbau des Anschlussstutzens 5 erleichtert und den einfachen Einsatz eines Elektroschraubers und/oder eines Drehmomentenschlüssels ermöglicht, was eine hohe Genauigkeit bezüglich der aufzubringenden Zugkraft ergibt.

Um den Bock 50 nach erfolgtem Einbau des Anschlussstutzens 5 abnehmen zu können, ist die Stützeinrichtung 21 mit Halteköpfen 56 versehen, die ebenfalls mit einer zum Eingriff mit der umfangsseitigen Rillung 49 des Zugrings 9 bringbaren Zahnung 57 versehen sind. Die Halteköpfe 56 sind zweckmäßig in radialer Richtung federnd angeordnet bzw. ausgebildet und so angeordnet, dass die Zahnung 57 zuverlässig in die Rillung 49 eingreift. Die Ausbildung ist so, dass bei einer Bewegung der Stützeinrichtung 21 nach unten, d.h. zum tragwerkseitigen Ende des Zugrings 9 hin, die Zahnung 57 in Folge der radialen Nachgiebigkeit der Halteköpfe 56 radial ausweichen kann und in der Gegenrichtung zuverlässig blockiert wird. Es ergibt sich daher eine Funktionsweise nach Art einer Ratsche. Die Stützeinrichtung 21 kann bereits von Anfang an auf den Zugring 9 aufgeschoben sein oder jedenfalls vor Anbringung des Bocks 50 aufgeschoben werden. Durch Betätigung der Schraube 52 wird dann der Zugring 9 nach radial außen bewegt, was einer nach radial innen erfolgenden Bewegung der Stützeinrichtung 21 gleichkommt, die in Folge des Ratscheneffekts möglich ist. Sobald die erwünschte Zugspannung erreicht ist, bleibt die Zahnung 57 in der betreffenden Rille der Rillung 49, so dass sich eine zuverlässige Abstützung des Zugrings 9 unter Beibehaltung der Zugkraft ergibt und der Bock 50 abgenommen werden kann. Diese Situation liegt der Figur 1 zugrunde. Der Figur 2 liegt der Montagevorgang zugrunde, wobei die Stützeinrichtung 21 bereits auf den Zugring 9 aufgeschoben ist, aber noch keine Stützwirkung entfaltet.

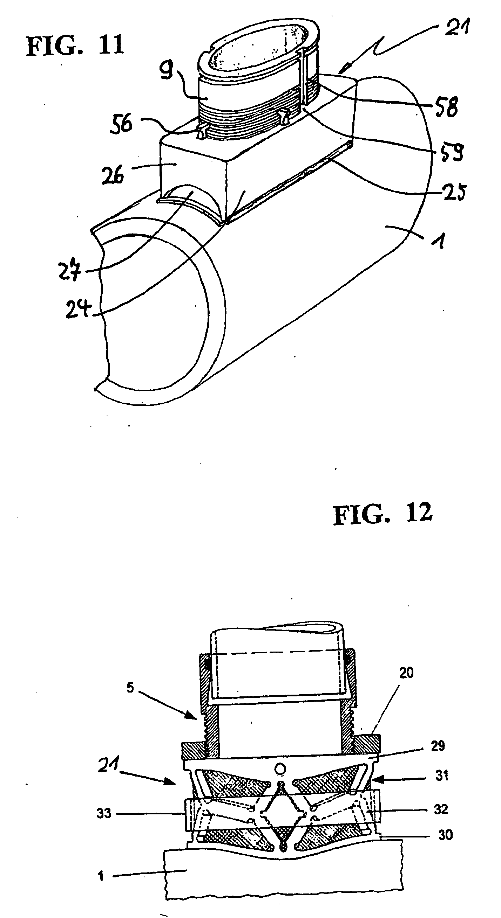

Die Stützeinrichtung 21 kann, wie Figur 11 zeigt, als kastenförmig ausgebildeter, vom Anschlussstutzen 5 durchgriffener Drucksattel ausgebildet sein, der mit seinen in Längsrichtung des Hauptrohrs 1 verlaufenden Seitenwänden 24 auf sogenannten Kämpferbereichen des Hauptrohrs 1 aufsitzt. Die Seitenwände 24 können einfach durch über den Scheitel des Hauptrohrs 1 hinweg gehende Bänder miteinander verbunden sein. Zweckmäßig sind jedoch die Seitenwände 24 verbindende Stirnwände 26 vorgesehen. An den Anlagekanten der Seitenwände 24 können Dichtstreifen 25 vorgesehen sein. Die den Scheitelbereich des Hauptrohrs 1 überquerenden Stirnwände 26 können mit verformbaren Wandelementen 27 versehen sein, die sich unter entsprechender Verformung dichtend an den gebogenen Außenbereich des Haupttors 1 anlegen. Die Wandelemente 27 können einfach als aus gummieelastischem Material bestehende Platinen ausgebildet sein, die in eine zugeordnete Kammer der jeweils zugehörigen Stirnwand 26 verschiebbar eingreifen, wie aus Figur 5 anschaulich hervorgeht. Um die erforderliche Verformung der genannten Wandelemente 27 im Anlagebereich in Grenzen zu halten, kann deren Unterkante und/oder Oberkante über der Sattelbreite bereits eine konkave Ausgangsform haben, so dass sich die Anpassung an die konvexe Außenform des Hauptrohrs 1 leichter einstellt.

Zweckmäßig erfolgt der Einbau des Schmiegerings 8 und dementsprechend des gesamten Anschlussstutzens 5 in Folge der vorzugsweise vorgesehenen Vorverformung, d.h. der Bereitstellung eines mittleren Verlaufs des Schmiegerings 8 und der gewünschten Position der Anschlusspunkte des Tragwerks 11 an den Schmiegering 8 in den Scheitel- und Kempferpunkten in einer bevorzugten Drehstellung. Um dies sicherzustellen, kann eine Verdrehsicherung des Anschlussstutzens 5 gegenüber der Stützeinrichtung 21 vorgesehen sein. Hierzu ist bei der Ausführung gemäß Figur 11 der den rückwärtigen Bereich des Anschlussstutzens 5 bildende Zugring 9 mit wenigstens einer umfangsseitigen, in axialer Richtung verlaufenden Nut 58 versehen, in die eine im Bereich der Bohrung des Deckels des Sattels vorspringende Feder 59 eingreift. Zweckmäßig können auch mehrere derartige Sperreinrichtungen am Umfang vorgesehen sein. Wichtig ist, dass diese in jedem Fall eine eindeutige Drehstellung gewährleisten.

Der Figur 12 liegt eine alternative Ausführung für die Stützeinrichtung 21 mit einer vom Anschlussstutzen 5 durchgriffenen Stütztrommel zugrunde. Diese enthält einen oberen, starren Druckring 29 und einen unteren, auf dem Hauptrohr 1 zur Anlage kommenden und entsprechend dem Verlauf des Kontaktbereichs verformbaren Anlagering 30. Der Druckring 29 und der Anlagering 30 sind über ein die Verformung des Anlagerings 30 ausgleichendes, zumindest zur Übertragung von Druckkräften geeignetes Tragwerk 31 miteinander verbunden. Dieses ist als durch Stäbe 32 gebildetes Fachwerk ausgebildet, wobei die Stäbe 32 in bezüglich der Achse des Anschlussstutzens 5 streck- und stauchbare Stabanordnungen bilden. Im dargestellten Beispiel sind am Druckring 29 und Anlagering 30 angreifende, rautenförmige Stabanordnungen vorgesehen, die durch einfache Zwischenstäbe verbunden sind. Um zu verhindern, dass die Stäbe 32 des hier auf Druck beanspruchten Tragwerks 31 unter der aufgebrachten Drucklast nach außen ausknicken, ist ein das Tragwerk 31 gürtelförmig umfassendes Halteband 33 vorgesehen. Außerdem bildet das Halteband 33 einen die Verformung des Tragwerks 31 begrenzenden Anschlag, wodurch eine zuverlässige Verformung des Schmiegerings 8 mittels der Spanneinrichtung sichergestellt wird. Zur Bewerkstelligung einer wasserdichten Anordnung können im Bereich der dem Hauptrohr 1 zugewandten Unterseite des Anlagerings 30 ein umlaufender Dichtstreifen vorgesehen und die Zwischenräume zwischen den Stäben 32 sowie dem Druckring 29 und dem Anlagering 30 durch in sich bewegliche, balgartige Zwischenhäute ausgefacht sein.

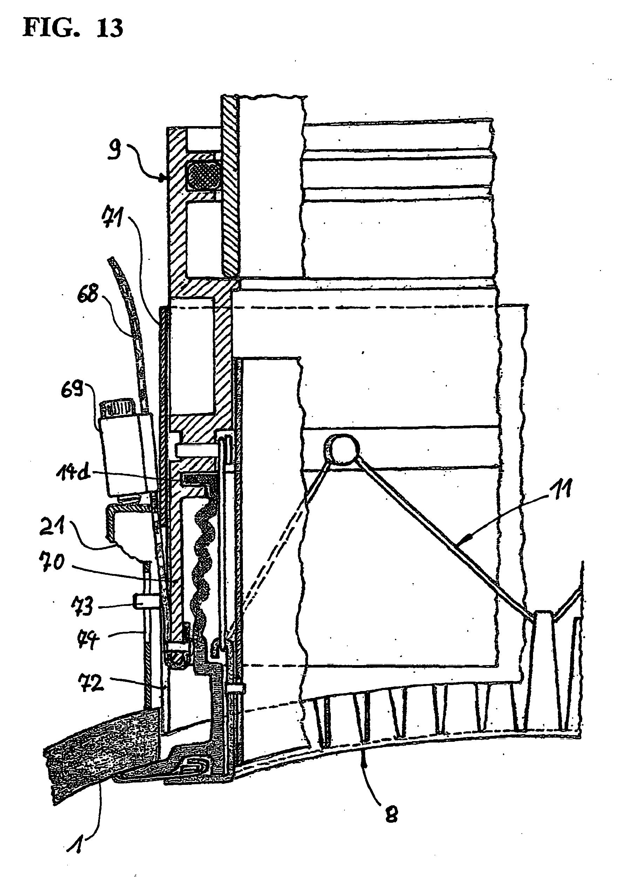

Bei dem der Figur 13 zugrundeliegenden Beispiel sind zur Bildung einer dem Spannring 9 zugeordneten Spannvorrichtung mehrere am Zugring 9 angreifende, gleichmäßig über den Umfang des Zugrings 9 verteilte Spanngurte 68 vorgesehen, die jeweils mit einem zugeordneten, auf der Stützeinrichtung 21 abgestützten Spannschloss 69 zusammenwirken. Die Spanngurte 68 sind zumindest auf dem größten Teil ihrer Länge mit Verzahnungselementen inform einer Zahn-, Kerb- oder Lochreihe etc. versehen. Die Spannschlösser 69 besitzen hiermit zusammenwirkende Vorschuborgane z.B. in Form einer Schnecke etc., die mit einem von außen betätigbaren Betätigungskopf versehen sind. Dieser ist zweckmäßig so ausgebildet, dass sowohl eine manuelle Betätigung als auch eine Betätigung mittels eines Elektroschraubers etc. möglich ist. Die Spannschlösser 69 sind auf der Oberseite der Stützeinrichtung 21 abgestützt, die einen Aufbau gemäß Figuren 11 oder 12 aufweisen kann.

Um genügend Hubweg zu bekommen, das heißt einen zuverlässigen Spannvorgang bewerkstelligen zu können, ist der Zugring 9 bei der Ausführung gemäß Figur 13 abweichend von Figur 5 mit einem Tief in die Stützeinrichtung 21 eingreifenden, das Tragwerk 11 umfassenden Kragen 70 versehen, an dessen unterem, das heißt dem Schmiegering 8 zugewandtem Ende die Spanngurte 68 angreifen. Diese umgreifen hierzu das untere Ende des Kragens 70 und sind mit ihrem schlossfernen Ende an der Innenseite des Kragens 70 befestigt, beispielsweise angenietet etc.. Die das Tragwerk 11 umgebende Manschette 14a der Dichtung 14 verläuft hierbei radial innerhalb des Kragens 70. Der obere Befestigungsflansch 14d verläuft dementsprechend nach radial außen und greift in eine nach radial innen offene Nut des Spannrings 9 ein.

In Figur 13 ist auch ein den Zugring 9 mit Schiebespiel umfassendes Führungsrohr 71 gezeigt, das mit seinem unteren Ende in die Bohrung des Hauptrohrs 1 eingreifen kann, wodurch eine Zentrierung bewerkstelligt wird. Das Führungsrohr 71 ist mit den Spanngurten 68 zugeordneten Längsschlitzen 72 versehen, so dass die Spanngurte 68 vom innerhalb des Führungsrohrs 71 verlaufenden Kragen 70 des Zugrings 9 zu den außerhalb des Führungsrings 71 angeordneten Spannschlössern 69 geführt werden können. Jedem Spanngurt 68 ist ein Längsschlitz 72 zugeordnet, dessen lichte Weite praktisch der Gurtbreite entspricht, wodurch das Führungsrohr 71 gegenüber dem Zugring 9 unverdrehbar fixiert wird und umgekehrt. Um die Drehstellung des Zugrings 9 gegenüber der Stützeinrichtung 21 festzulegen kann das Führungsrohr 71, wie in Figur 13 weiter angedeutet ist, mit wenigstens einem Radialstift 73 versehen sein, der in einen zugeordneten Führungsschlitz 74 in einer Seitenwand der Stützeinrichtung 21 eingreift. Es wäre jedoch auch denkbar, den Stift 73 direkt am Zugring 9 bzw. dessen Kragen 70 anzubringen, sofern ein Führungsrohr 71 nicht vorgesehen ist oder eine im Zusammenhang mit der Figur 11 erwähnte Drehsicherung in Form eines Nut- und Federeingriffs vorzusehen. Der Stift 73 ist in Figur 13 um einen gewissen Winkel verdreht gezeichnet. In Wirklichkeit befindet sich der Stift 73 natürlich in einem außerhalb der Längsschlitze 72 liegenden Umfangsbereich. Die mit Hilfe des Führungsrohrs 71 erreichte Zentrierung könnte natürlich auch mit Hilfe eines in die Bohrung des Hauptrohrs 1 eingreifenden Bunds der Stützeinrichtung 21 erreicht werden, wie beispielsweise in Figur 1 angedeutet ist. Vorstehend sind zwar einige Ausführungsbeispiele der Erfindung näher erläutert, ohne dass jedoch hiermit eine Beschränkung verbunden sein soll. Vielmehr stehen dem Fachmann eine Reihe von Möglichkeiten zur Verfügung, um den allgemeinen Gedanken der Erfindung an die Verhältnisse des Einzelfalls anzupassen.

## Patentansprüche

1. Vorrichtung zum Verbinden eines Hauptrohrs (1) eines Rohrsystems, insbesondere Kananlrohrsystems, mit einem einmündenden Seitenrohr (2), wobei die Vorrichtung einen in eine Wandausnehmung (4) des Hauptrohrs (1) einsetzbaren Anschlussstutzen (5) aufweist, der mit seinem vorderen Endbereich an der Innenseite des Hauptrohrs (1) abstützbar und hiermit mittels einer durch eine Spanneinrichtung auf einen rückwärtigen. aus dem Hauptrohr (1) herausragenden, starren Abschnitt des Anschlussstutzens (5) aufgebrachten Spannkraft verspannbar ist, **dadurch gekennzeichnet, dass** der vordere Endbereich des Anschlussstutzens (5) einen elastisch verformbaren, unter Zug an die Kontur des inneren Randbereichs der zugeordneten Wandausnehmung (4) des Hauptrohrs (1) sich anschmiegenden Schmiegering (8) aufweist, dessen für eine Abstützung an der Innenseite des Hauptrohrs (1) wirksamer Durchmesser über den Durchmesser der zugeordneten Wandausnehmung (4) des Hauptrohrs (1) hinaus vergrößerbar ist und der von dem rückwärtigen, starren Abschnitt des Anschlussstutzens (5) durch ein umlaufendes, eine zum Ausgleich der bei einem Anschmiegvorgang bewerkstelligten, axialen Formänderung des Schmiegerings (8) entsprechend formvariable Struktur aufweisendes, zumindest Zugkräfte übertragendes Tragwerk (11) örtlich getrennt und hierdurch mit dem starren Abschnitt des Anschlussstutzens (5) verbunden ist.

2. Vorrichtung nach Anspruch 1, **dadurch gekennzeichnet, dass** der Schmiegering (8) mit über seinen Umfang verteilten, in radialer Richtung ein- und ausstellbaren Stützelementen (13) versehen ist, die vorzugsweise jeweils als um eine schmiegeringseitige Schwenkachse schwenkbare, in radialer Richtung ein- und ausklappbare Klappen ausgebildet sind.

3. Vorrichtung nach Anspruch 2, **dadurch gekennzeichnet, dass** die nebeneinander angeordneten Klappen zur Bildung eines umlaufenden Klappenkranzes (62) durch Stege 61 verbunden und um eine durch einen umlaufenden Ring (63) gebildete, auf einem Tragring (8a) des Schmiegerings (8) angeordnete Achse schwenkbar sind.

4. Vorrichtung nach einem der vorhergehenden Ansprüche, **dadurch gekennzeichnet, dass** auf dem Schmiegering (8) eine umlaufende Dichtung (14) angeordnet ist, die eine zylindrische, die Wandausnehmung (4) des Hauptrohrs (1) durchgreifende Manschette (14a) und eine flanschartig hiervon abstehende, von unten abgestützte, vorzugsweise von den Stützelementen (13) untergriffene Dichtleiste (14b) aufweist.

5. Vorrichtung nach Anspruch 4, **dadurch gekennzeichnet, dass** die zylindrische Manschette (14a) der Dichtung (14) das Tragwerk (11) von außen umgreifend vom Schmiegering (8) bis zum hiervon beabstandeten rückwärtigen Abschnitt des Anschlussstutzens (5) reicht und vorzugsweise mit ihrem rückwärtigen Ende hieran festlegbar ist und die vorzugsweise in ihrem vorderen Endbereich eine durch einen radialen Einzug gebildete, der Dichtleiste (14b) im hochgestellten Zustand zugeordnete Kammer (14c) aufweist.

6. Vorrichtung nach einem der vorhergehenden Ansprüche, **dadurch gekennzeichnet, dass** dem Tragwerk (11) ein von diesem umgriffenes Innendeckrohr (40) zugeordnet ist, das vom Schmiegering (8) bis zum hiervon beabstandeten, rückwärtigen Abschnitt des Anschlussstutzens (5) reicht und einerseits in diesen und andererseits in eine schmiegeringseitige, vorzugsweise durch vom Schmiegering (8) in axialer Richtung abstehende Zungen (41) gebildete Fassung eingreift und das vorzugsweise an zwei gegenüber der Scheitellinie des an die Innenseite des Hauptrohrs (1) angeschmiegten Schmiegerings (8) um 90° versetzten Zungen befestigt ist.

7. Vorrichtung nach einem der vorhergehenden Ansprüche, **dadurch gekennzeichnet, dass** das Tragwerk (11) als durch Stäbe (15) gebildetes Fachwerk ausgebildet ist, das einen Stabverlaufänderungsfreiheitsgrad aufweist.

8. Vorrichtung nach Anspruch 7, **dadurch gekennzeichnet, dass** das Fachwerk (11) durch zwischen dem Schmiegering (8) und dem rückwärtigen, starren Abschnitt des Anschlussstutzens (5) vorgesehene, Z-förmige Stabanordnungen (16c) gebildet wird, wobei vorzugsweise vier bezüglich einer axialen Mantellinie spiegelbildliche Paare derartiger Stabanordnungen (16c) vorgesehen sind, von denen zwei derartige Paare der Scheitellinie des an die Innenseite des Hauptrohrs (1) angeschmiegten Schmiegerings (8) zugeordnet und zwei derartige Paare um 90° hiergegen versetzt sind.

9. Vorrichtung nach einem der vorhergehenden Ansprüche 1-6, **dadurch gekennzeichnet, dass** das Tragwerk (11) als Seilgespanne mit einem zwischen schmiegeringseitig vorgesehenen, vorzugsweise an vom Schmiegering (8) abstehenden Zungen angebrachten Seilhaltern (18a) und umfangsmäßig hiergegen versetzten, dem rückwärtigen Abschnitt des Anschlussstutzens (5) zugeordneten Seilhaltern (18b) mit Bewegungsfreiheitsgrad verlaufenden Seil (18) ausgebildet ist.

10. Vorrichtung nach einem der vorhergehenden Ansprüche, **dadurch gekennzeichnet, dass** dem in den rückwärtigen Abschnitt des Anschlussstutzens (5) eingreifenden Ende des Innendeckrohrs (40) ein in der Betriebsstellung hiervon beabstandeter, am rückwärtigen, starren Abschnitt des Anschlussstutzens vorgesehener Anschlag (43) zugeordnet ist.

11. Vorrichtung nach einem der vorhergehenden Ansprüche, **dadurch gekennzeichnet, dass** der Schmiegering (8), der hiervon beabstandete, als Zugring (9) ausgebildete, rückwärtige Abschnitt des Anschlussstutzens (5) und das dazwischen angeordnete Tragwerk (11) als voneinander separate Bauteile bzw. - gruppen ausgebildet sind und dass das Tragwerk (11) einerseits mit dem Schmiegering (8) und andererseits mit dem hiervon beabstandeten, rückwärtigen Abschnitt des Anschlussstutzens (5) kraftübertragend kuppelbar ist.

12. Vorrichtung nach einem der vorhergehenden Ansprüche, **dadurch gekennzeichnet, dass** der Schmiegering (8) mittels einer am Umfang des rückwärtigen Abschnitts des Anschlussstutzens (5) angreifenden, vorzugsweise über eine Stützeinrichtung (21) auf der Außenseite des Hauptrohrs (1) abstützbaren Zugeinrichtung in bezüglich des Hauptrohrs (1) radialer Richtung beaufschlagbar ist.

13. Vorrichtung nach Anspruch 12, **dadurch gekennzeichnet, dass** die Zugeinrichtung einen auf der Außenseite des Hauptrohrs (1) direkt oder indirekt abstützbaren, vorzugsweise portalförmigen Bock (50) und eine mit dem Querbalken des Bocks (50) durch ein Zugorgan (52) verbundene, zum Eingriff mit dem rückwärtigen Abschnitt des Anschlussstutzens (5) bringbare Zange aufweist und dass der Schmiegering (8) mittels einer mit dem Umfang des rückwärtigen Abschnitts des Anschlussstutzens (5) verrastbaren, auf dem Hauptrohr (1) anliegenden, vorzugsweise die Zugeinrichtung aufnehmenden Stützeinrichtung (21) in der angeschmiegten Stellung haltbar ist.

14. Vorrichtung nach Anspruch 12, **dadurch gekennzeichnet, dass** der rückwärtige, als Zugring (9) ausgebildete Abschnitt des Anschlussstutzens (5) einen in die Stützeinrichtung (21) eingreifenden Kragen (70) aufweist, und dass zur Bildung der Zugeinrichtung mehrere, gleichmäßig über den Umfang des Zugrings (9) verteilte, am dem Schmiegering (8) zugewandten Endbereich des Kragens (70) angreifende Spanngurte (68) vorgesehen sind, die mit auf der Stützeinrichtung (21) abgestützten Spannschlössern (69) zusammenwirken.

15. Vorrichtung nach Anspruch 14, **dadurch gekennzeichnet, dass** der Kragen (70) des Zugrings (9) von einem in die Wandausnehmung des Hauptrohrs (1) eingreifenden Führungsrohr (71) umfasst ist dessen Drehstellung einerseits gegenüber dem Zugring (9) und andererseits gegenüber der Stützeinrichtung (21) festgelegt ist.

16. Vorrichtung nach einem der Ansprüche 12 - 15, **dadurch gekennzeichnet, dass** die Stützeinrichtung (21) als vom Anschlussstutzen (5) durchgriffener Sattel oder als Stütztrommel ausgebildet ist, die einen oberen, der Zugeinrichtung zugeordneten Druckring (29) und einen unteren, an die Außenseite des Hauptrohrs (1) anpressbaren, entsprechend dem Verlauf des Berühungsbereichs verformbaren Anlagering (30) aufweist, der mit dem Druckring (29) über ein weiteres, zumindest Druckkräfte übertragendes, die Formänderung des unteren Anlagerings (30) ausgleichendes Tragwerk (31) verbunden ist.

## Claims

1. An apparatus for connecting a main pipe (1) of a piping system, especially a sewer piping system, comprising a side pipe (2) entering therein, wherein the apparatus comprises a connecting socket (5) that can be inserted into a wall recess (4) of the main pipe (1), which connecting socket can be supported with its front end region on the inside of the main pipe (1) and can be clamped therewith by means of a clamping force applied by means of a clamping device to a rear rigid section of the connecting socket (5) which protrudes from the main pipe (1), **characterized in that** the front end region of the connecting socket (5) comprises an elastically deformable nestling ring (8) sitting close under tension to the contour of the inner boundary region of the associated wall recess (4) of the main pipe (1), whose diameter which is effective for support on the inside of the main pipe (1) can be enlarged beyond the diameter of the associated wall recess (4) of the main pipe (1) and which is locally separated from the rear rigid section of the connecting socket (5) by a circumferential support structure (11) which at least transfers tensile forces and which has a respective dimensionally variable structure for compensating the axial change in the shape of the nestling ring (8) caused by a nestling-up process, and is thus connected to the rigid section of the connecting socket (5).

2. An apparatus according to claim 1, **characterized in that** the nestling ring (8) is provided with support elements (13) which are distributed over its circumference, can be retracted and extended in the radial direction (13), and are preferably respectively arranged as flaps which are pivotable about a pivoting axis on the nestling ring side and can be folded inwardly and outwardly in the radial direction.

3. An apparatus according to claim 2, **characterized in that** the flaps arranged adjacent to each other are connected by webs (61) for forming a circumferential ring of flaps (62), and are pivotable about an axis formed by a circumferential ring (63) and arranged on a support ring (8a) of the nestling ring (8).

4. An apparatus according to one of the preceding claims, **characterized in that** a circumferential gasket (14) is arranged on the nestling ring (8), which gasket comprises a cylindrical sleeve (14a) penetrating the wall recess (4) of the main pipe (1) and comprises a sealing strip (14b) which protrudes therefrom in the manner of a flange, is supported from below and is engaged from beneath by support elements (13).

5. An apparatus according to claim 4, **characterized in that** the cylindrical sleeve (14a) of the gasket (14), embracing the support structure (11) from the outside, reaches from the nestling ring (8) up to the rear section of the connecting socket (5) that is spaced therefrom, and is preferably fixable with its rear end thereto, and which preferably comprises in its front end region a chamber (14c) which is formed by a radial indentation and which is associated with the sealing strip (14b) in the upright state.

6. An apparatus according to one of the preceding claims, **characterized in that** the support structure (11) is associated with an internal cover pipe (40) which is embraced by the same and which reaches from the nestling ring (8) to the rear section of the connecting socket (5) that is spaced therefrom, and engages therein on the one hand and into a socket provided on the nestling ring side and preferably formed by tongues (41) protruding in the axial direction from the nestling ring (8), and which is preferably fixed to two tongues which are offset by 90° in relation to the apex line of the nestling ring (8) nestling against the inside of the main pipe (1).

7. An apparatus according to one of the preceding claims, **characterized in that** the support structure (11) is arranged as a framework formed by rods (15), which framework has a degree of freedom for changing the progression of the rods.

8. An apparatus according to claim 7, **characterized in that** the framework (11) is formed by Z-shaped rod arrangements (16c) which are provided between the nestling ring (8) and the rear rigid section of the connecting socket (5), wherein preferably four pairs of such rod arrangements (16c) are provided which are mirror-inverted with respect to an axial surface line, of which two such pairs are associated with the surface line of the nestling ring (8) nestling the inside of the main pipe (1) and two such pairs are offset by 90° in relation thereto.

9. An apparatus according to one of the preceding claims 1 to 6, **characterized in that** the support structure (11) is arranged as teams of cables with a cable (18) extending with a degree of freedom of movement between cable holders (18a) provided on the nestling ring side and preferably attached to tongues protruding from the nestling ring (8) and cable holders (18b) which are circumferentially offset thereto and are associated with the rear section of the connecting socket (5).

10. An apparatus according to one of the preceding claims, **characterized in that** the end of the inside cover pipe (40) engaging into the rear section of the connecting socket (5) is associated with a stop (43) which is spaced therefrom in the operating position and is provided on the rear rigid section of the connecting socket.

11. An apparatus according to one of the preceding claims, **characterized in that** the nestling ring (8), the rear section of the connecting socket (5) which is spaced therefrom and is arranged as a tension ring (9), and the interposed support structure (11) are arranged as components or component groups which are separate from one another, and that the support structure (11) can be coupled in a force-transmitting manner with the nestling ring (8) on the one hand and with the rear section of the connecting socket (5) that is spaced therefrom.

12. An apparatus according to one of the preceding claims, **characterized in that** the nestling ring (8) can be driven in the radial direction with respect to the main pipe (1) by means of a tension device which acts on the circumference of the rear section of the connecting socket (5) and can preferably be supported on the outside of the main pipe (1) via a support device (21).

13. An apparatus according to claim 12, **characterized in that** the tension device comprises a preferably portal-shaped pillow block (50) which can be supported directly or indirectly on the outside of the main pipe (1) and comprises tongs which are connected to a transverse beam of the pillow block (50) by a tension member (52) and can be brought into engagement with the rear section of the connecting socket (5), and that the nestling ring (8) can be held in the nestled position by means of a support device (21) which can be latched to the circumference of the rear section of the connecting socket (5), rests on the main pipe (1), and preferably accommodates the tension device.

14. An apparatus according to claim 12, **characterized in that** the rear section of the connecting socket (5) arranged as a tension ring (9) comprises a collar (70) engaging in the support device (21), and that for forming the tension device several tensioning belts (68) are provided which are evenly distributed over the circumference of the tension ring (9), act on the end region of the collar (70) facing the nestling ring (8), and cooperate with tension jacks (69) supported on the support device (21).

15. An apparatus according to claim 14, **characterized in that** the collar (70) of the tension ring (9) is embraced by a guide pipe (71) engaging in the wall recess of the main pipe (1), whose rotary position is determined in relation to the tension ring (9) on the one hand and in relation to the support device (21) on the other hand.

16. An apparatus according to one of the claims 12 to 15, **characterized in that** the support device (21) is arranged as a saddle or support drum which is penetrated by the connecting socket (5) and which comprises an upper pressure ring (29) associated with the tension device and a bottom contact ring (30) which can be pressed against the outside of the main pipe (1), is deformable according to the progression of the contact region, and is connected to the pressure ring (29) via a further support structure (31) which at least transmits pressure forces and compensates the dimensional change of the bottom contact ring (30).

## Revendications

1. Dispositif de liaison d'un tuyau principal (1) d'un système de tuyaux, en particulier système de tuyaux de canalisation, comprenant un tuyau latéral entrant (2), ledit dispositif présentant une tubulure de raccordement (5) qui peut être insérée dans un évidement de paroi (4) du tuyau principal (1) et qui peut être appuyée, par sa zone d'extrémité avant, sur la face intérieure du tuyau principal (1) et peut être serrée avec celui-ci au moyen d'un effort de serrage appliqué par un dispositif de serrage sur une portion arrière rigide de la tubulure de raccordement (5), qui fait saillie hors du tuyau principal (1), **caractérisé par le fait que** la zone d'extrémité avant de la tubulure de raccordement (5) présente une bague épousant la forme (8) élastiquement déformable qui, sous traction, épouse la forme du contour de la zone marginale intérieure de l'évidement de paroi (4) associé du tuyau principal (1), et dont le diamètre efficace pour un appui sur la face intérieure du tuyau principal (1) peut être agrandi au-delà du diamètre de l'évidement de paroi (4) associé du tuyau principal (1) et qui est séparée localement de la portion arrière rigide de la tubulure de raccordement (5) par un système porteur (11) périphérique présentant une structure à forme variable correspondante pour compenser la déformation axiale de ladite bague épousant la forme (8) effectuée lors d'une opération à épouser la forme, et transmettant au moins des forces de traction, et est reliée par celui-ci à la portion rigide de la tubulure de raccordement (5).

2. Dispositif selon la revendication 1, **caractérisé par le fait que** ladite bague épousant la forme (8) est pourvue d'éléments d'appui (13) qui sont répartis sur sa circonférence et aptes à être rentrés et sortis dans la direction radiale et qui, de préférence, sont réalisés chacun en tant que volets aptes à pivoter sur un axe de pivotement côté bague épousant la forme et à être repliés et dépliés dans la direction radiale.

3. Dispositif selon la revendication 2, **caractérisé par le fait que** les volets disposés les uns à côté des autres sont reliés entre eux par des entretoises (61) pour former une couronne de volets (62) périphérique et peuvent pivoter sur un axe formé par une bague périphérique (63) et disposé sur une bague support (8a) de ladite bague épousant la forme (8).

4. Dispositif selon l'une quelconque des revendications précédentes, **caractérisé par le fait que** sur ladite bague épousant la forme (8) est disposé un joint d'étanchéité (14) périphérique qui présente un manchon (14a) cylindrique traversant ledit évidement de paroi (4) du tuyau principal (1), et une baguette d'étanchéité (14b) qui fait saillie de celui-ci à la manière d'une bride et est appuyée d'en bas et sous laquelle, de préférence, s'étendent lesdits éléments d'appui (13).

5. Dispositif selon la revendication 4, **caractérisé par le fait que** ledit manchon (14a) cylindrique du joint d'étanchéité (14), embrassant de l'extérieur ledit système porteur (11), s'étend depuis ladite bague épousant la forme (8) jusqu'à la portion arrière de la tubulure de raccordement (5), qui en est espacée, et y peut être fixé de préférence par son extrémité arrière et comprend, de préférence dans sa zone d'extrémité avant, une chambre (14c) formée par un retrait radial et associée à ladite baguette d'étanchéité (14b) en état relevé.

6. Dispositif selon l'une quelconque des revendications précédentes, **caractérisé par le fait qu'**audit système porteur (11) est associé un tuyau intérieur de recouvrement (40) qui est embrassé par celui-ci et s'étend depuis ladite bague épousant la forme (8) jusqu'à la portion arrière de la tubulure de raccordement (5), qui en est espacée, et qui s'engage, d'un côté, dans celle-ci et, de l'autre côté, dans une monture côté bague épousant la forme, formée de préférence par des languettes (41) faisant saillie de ladite bague épousant la forme (8) dans la direction axiale, et qui, de préférence, est fixé sur deux languettes décalées de 90° par rapport à la ligne de sommet de la bague épousant la forme (8) pressée contre la face intérieure du tuyau principal (1).

7. Dispositif selon l'une quelconque des revendications précédentes, **caractérisé par le fait que** ledit système porteur (11) est réalisé comme ossature qui est formée par des barres (15) et qui présente un degré de liberté de changement de l'allure des barres.

8. Dispositif selon la revendication 7, **caractérisé par le fait que** ladite ossature (11) est constituée par des ensembles de barres (16c) en Z qui sont prévus entre ladite bague épousant la forme (8) et la portion arrière rigide de la tubulure de raccordement (5), de préférence quatre paires de tels ensembles de barres (16c) réfléchies par rapport à une génératrice axiale étant prévues dont deux telles paires sont associées à la ligne de sommet de la bague épousant la forme (8) pressée contre la face intérieure du tuyau principal (1) et deux telles paires sont décalées de 90° par rapport à cela.

9. Dispositif selon l'une quelconque des revendications précédentes 1 à 6, **caractérisé par le fait que** ledit système porteur (11) est réalisé comme ensembles de câble avec un câble (18) qui s'étend, avec un degré de liberté de mouvement, entre des supports de câble (18a) qui sont prévus côté bague épousant la forme et, de préférence, montés sur des languettes faisant saillie de la bague épousant la forme (8), et des supports de câble (18b) qui, quant à la circonférence, sont décalés par rapport à ceux-ci et associés à la portion arrière de la tubulure de raccordement (5).

10. Dispositif selon l'une quelconque des revendications précédentes, **caractérisé par le fait qu'**à l'extrémité du tuyau intérieur de recouvrement (40), qui s'engage dans la portion arrière de la tubulure de raccordement (5), est associée une butée (43) espacée de celle-ci dans la position de service et prévue sur la portion arrière rigide de la tubulure de raccordement.

11. Dispositif selon l'une quelconque des revendications précédentes, **caractérisé par le fait que** ladite bague épousant la forme (8), ladite portion arrière de la tubulure de raccordement (5) qui en est espacée et est réalisée comme bague de traction (9) ainsi que ledit système porteur (11) disposé entre celles-ci sont réalisés en tant que composants ou bien sous-groupes séparés les uns des autres, et que ledit système porteur (11) peut être couplé à transmission de force, d'un côté, à ladite bague épousant la forme (8) et, de l'autre côté, à la portion arrière de la tubulure de raccordement (5), qui en est espacée.

12. Dispositif selon l'une quelconque des revendications précédentes, **caractérisé par le fait que** ladite bague épousant la forme (8) peut être sollicitée dans la direction radiale par rapport au tuyau principal (1) au moyen d'un dispositif de traction qui se prend sur la circonférence de la portion arrière de la tubulure de raccordement (5) et qui peut être appuyé sur la face extérieure du tuyau principal (1) par un dispositif d'appui (21).

13. Dispositif selon la revendication 12, **caractérisé par le fait que** ledit dispositif de traction comprend un chevalet (50) de préférence en forme de portail qui peut être appuyé directement ou indirectement sur la face extérieure du tuyau principal (1) ainsi qu'une pince qui est reliée par un organe de traction (52) à la traverse du chevalet (50) et peut être mise en prise avec la portion arrière de la tubulure de raccordement (5), et que ladite bague épousant la forme (8) peut être maintenue dans la position où elle épouse la forme au moyen d'un dispositif d'appui (21) qui peut être encliqueté avec la circonférence de la portion arrière de la tubulure de raccordement (5) et prend appui sur le tuyau principal (1) et qui, de préférence, reçoit ledit dispositif de traction.

14. Dispositif selon la revendication 12, **caractérisé par le fait que** la portion arrière de la tubulure de raccordement (5) qui est réalisée comme bague de traction (9) présente une collerette (70) s'engageant dans le dispositif d'appui (21), et que, pour former ledit dispositif de traction, on prévoit une pluralité de sangles de tension (68) qui sont réparties régulièrement sur la circonférence de la bague de traction (9) et se prennent sur la zone d'extrémité de la collerette (70), qui montre vers ladite bague épousant la forme (8), et qui agissent de concert avec des tendeurs (69) appuyés sur ledit dispositif d'appui (21).

15. Dispositif selon la revendication 14, **caractérisé par le fait que** la collerette (70) de la bague de traction (9) est embrassée par un tuyau de guidage (71) qui s'engage dans ledit évidement de paroi du tuyau principal (1) et dont la position de rotation par rapport à ladite bague de traction (9) d'un côté et par rapport au dispositif d'appui (21) de l'autre côté est fixée.

16. Dispositif selon l'une quelconque des revendications 12 à 15, **caractérisé par le fait que** ledit dispositif d'appui (21) est réalisé en tant que selle ou comme tambour d'appui qui est traversé(e) par la tubulure de raccordement (5) et qui présente une bague de pression (29) supérieure associée au dispositif de traction ainsi qu'une bague d'appui (30) inférieure qui est apte à être pressée contre la face extérieure du tuyau principal (1) et est déformable suivant l'allure de la zone de contact et qui est reliée à ladite bague de pression (29) par un autre système porteur (31) transmettant au moins les forces de pression et compensant la déformation de ladite bague d'appui (30) inférieure.
